# EUROPÄISCHE PATENTSCHRIFT

(11) **EP 1 468 769 B1**
(45) Veröffentlichungstag und Bekanntmachung des Hinweises auf die Patenterteilung: **16.01.2008**
(21) Anmeldenummer: 04003096.7
(22) Anmeldetag: 12.02.2004
(51) Int. Cl.: B23C 3/35

(54) **Verfahren zum Herstellen eines Schlüsselrohlinges**
Process for producing a key blank
Procédé pour la fabrication d'une clé-ébauche

(30) Priorität: 16.04.2003 DE 10317775
(43) Veröffentlichungstag der Anmeldung: 20.10.2004
(73) Patentinhaber: Bosch, Karl-Heinz, 38300 La Orotava (ES)
(72) Erfinder: Bosch, Karl-Heinz, 38300 La Orotava (ES)
(74) Vertreter: Weiss, Peter

(56) Entgegenhaltungen:
- WO-A-01/57472
- CH-A- 449 386
- DE-A- 10 031 713

## Beschreibung

Die vorliegende Erfindung betrifft ein Verfahren zum Herstellen eines Schlüsselrohlings aus einem Werkstück mit zumindest einem Werkzeug, insbesondere einem Fräser einer Fräseinrichtung.

Herkömmlich sind unterschiedliche Verfahren zur Herstellung von Schlüsselrohlingen bekannt. Meist werden diese industriell gefertigt, den Schlüsseldiensten und Handwerkern als Rohling, mit eingefrästen Profilen bestehend aus Nuten, Ausnehmungen, Schrägen etc. dann zur Verfügung gestellt.

Der Schlüsseldienst bzw. der Fachmann muss lediglich stirnseitig entsprechende Zacken und Profilierungen beim Nachfertigen eines Schlüssels stirnseitig einbringen.

Nachteilig hieran ist, dass der Schlüsseldienst bzw. der Fachmann oder Händler immer eine Vielzahl von Schlüsselrohlingen mit den dem Originalschlüssel entsprechenden Profil bereitstellen muss. Die enorme Vielzahl unterschiedlicher Profile erfordert viel Platz und Lagerungskosten, was unerwünscht ist.

Zudem ist das Heraussuchen des passenden Profils zeitaufwendig und deshalb unerwünscht.

Bei anderen Verfahren ist bekannt, dass ein herkömmlicher Schlüsselrohling durch Kopierfräsen mit mehreren, der Profilform entsprechend ausgebildeten Scheibenfräsern erstellt wird.

Hierbei ist durch die Vielzahl der unterschiedlichen Profilformen, Nuten - spitz zulaufend, abgerundeten, geraden, Schrägen eine grosse Anzahl unterschiedlich ausgebildeter Scheibenfräser notwendig.

Zudem ist es bei jedem Schlüssel von neuem erforderlich die entsprechend profilierten Scheibenfräser in die Maschine einzusetzen. Der hohe Zeitbedarf und die Kosten hierfür sind unerwünscht.

Bei weiteren Verfahren ist bekannt, dass ein herkömmlicher Schlüsselrohling durch Kopierfräsen in vielen kleinen zumindest teilweise abgestuften Schritten mit schmal gestalteten Scheibenfräsern hergestellt wird. Hierbei werden die unterschiedlich geformten Profil-Ausnehmungen / Nuten durch die feine Abstufung nachgebildet. Hierbei ist nachteilig, dass diese stufenartige Bearbeitung sehr zeitaufwendig ist. Zudem führt die einseitige Belastung des Scheibenfräsers zu schnellem Verschleiss.

Die DE 100 31 713 A1 offenbart ein Verfahren sowie eine Vorrichtung zur Herstellung von Schlüsselrohlingen und/oder zur Herstellung von vollständigen Nachschlüsseln. Dabei wird das Profil des abzubildenden Schlüssels erfasst und in feinen abgestuften Stufen mittels feinen Fräsern nachgefräst. Ein derartiges Verfahren ist hinsichtlich des Fertigungsaufwandes sehr zeit- und kostenintensiv.

Aufgabe der vorliegenden Erfindung ist es, ein Verfahren der Eingangs genannten Art zu schaffen, welches die genannten Nachteile beseitigt und mit welchem in sehr kurzer Zeit ggf. auch vor Ort ein Schlüsselrohling mit einer in das Schloss passenden Profilierung hergestellt werden kann, wobei die Fertigungszeit erheblich minimiert werden soll. Zudem sollen die Lagerungskosten sowie die Werkzeugkosten reduziert werden können.

Zur Lösung dieser Aufgabe führen die Merkmale des Patentanspruches 1.

Bei der vorliegenden Erfindung hat sich als besonders vorteilhaft erwiesen, dass in einer Fräseinrichtung beliebige herkömmliche Schlüsselprofile querschnittlich erfasst abgespeichert vorliegen, wobei exakt der Ort von entsprechenden Profil-Ausnehmungen in den jeweiligen Profiloberflächen auch hinsichtlich einer maximalen Profilbreite und maximalen Profiltiefe abgelegt sind bzw. werden.

Auch ist von Vorteil wenn lediglich einzelne Profil-Teile, vorzugsweise Nuten, Stege abgespeichert sind aus denen dann ein entsprechendes Schlüsselprofil zusammengesetzt werden kann.

Unabhängig von der Form der Profile, ob mit Schrägen versehen, dreieckartig, oder querschnittlich radial gewölbt ausgebildet, wird die maximale Tiefe und die maximale Breite der jeweiligen Profil-Ausnehmungen, bezogen auf die Profiloberfläche erfasst und in ein entsprechend der Geometrie des verwendeten Scheibenfräsers optimiertes Profil umgerechnet. Dieses Profil wird dann mit einem oder mehreren Werkzeugen, vorzugsweise Fräsern, Sägen, Hobel, Laser etc. in das Werkstück eingebracht, insbesondere eingefräst.

Auf diese Weise lässt sich sehr schnell jeder beliebige Schlüsselrohling herstellen, in dem die Profile in Längsrichtung ein- oder beidseitig eingefräst werden.

Hierdurch lassen sich sämtliche Profile, egal welcher Oberflächenkontur, in Profile umrechnen die bezüglich Ihrer Nut-Flanken und Nut-Böden entsprechend der Geometrie des verwendeten Fräsers optimiert sind.

Bevorzugt kann hierbei ein gerade zulaufender Scheibenfräser mit rechtwinkliger Zahnform verwendet werden. Hierbei werden die Nut-Flanken lotrecht zur Profiloberfläche und die Nut-Böden parallel zur Profiloberfläche berechnet um mit möglichst wenigen Frässchritten ein Profil auszuräumen, das in den entsprechenden Zylinderschloss-Kanal passt.

Sollte es aufgrund der Berechnung der neuen optimierten Profilform zu einer Schwächung des Schlüssels, oder gar zu einem Durchbruch des Profils kommen, z.B. wenn zwei gegenüberliegende Profil-Nuten sehr wenig Abstand zueinander aufweisen, so ist es Aufgabe des erfindungsgemässen Verfahrens die Profil-Ausnehmungen an diesen kritischen Stellen so zu berechnen, dass hier möglichst viel Material beim Fräsvorgang stehen bleibt.

Sollte ein entsprechender gewünschter Schlüsselrohling nicht in der Fräseinrichtung od. dgl. abgelegt sein, so kann mittels einer Abtast- oder Kopiereinrichtung ein nachzufertigender Schlüssel, insbesondere seine Profilform eingelesen werden und in oben beschriebener Weise in ein, entsprechend der Geometrie des Fräsers, optimiertes Profil umgerechnet werden. Auch ist es möglich das eingelesene Profil aus mehreren abgelegten einzelnen Profil-Teilen zusammen zu setzen. Dieses Profil kann anschliessend in das Werkstück eingefräst, eingeschliffen oder eingelagert werden. Dies soll ebenfalls im Rahmen der Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigen in
Figur 1a einen schematisch dargestellten Querschnitt durch ein Schlüsselprofil eines herkömmlichen Schlüssels in räumlicher Ansicht;
Figur 1b den Querschnitt durch das Schlüsselprofil eines herkömmlichen Schlüssels wie in Figur 1a, jedoch nicht in räumlicher Ansicht;
Figur 2a den schematisch dargestellten Querschnitt durch einen mit einer mit fünf unterschiedlichen Scheibenfräsern bestückten Kopierfräsmaschine nachgefertigten Schlüsselrohling gemäss Figur 1b zusammen mit fünf Scheibenfräsern in Profilansicht;
Figur 3a den schematisch dargestellten Querschnitt durch einen mit einer mit einem schmalen Scheibenfräser bestückten Kopierfräsmaschine nachgefertigten Schlüsselrohling gemäss Figur 1b zusammen mit einem Scheibenfräser in Profilansicht;
Figur 4a den schematisch dargestellten Querschnitt durch einen erfindungsgemässen Schlüsselrohling gemäss Figur 1b; zusammen mit einem Scheibenfräser mit zylindrischer Profilierung;
Figur 4b den schematisch dargestellten Querschnitt durch einen erfindungsgemässen Schlüsselrohling gemäss Figur 1b zusammen mit einem Scheibenfräser mit trapetzförmiger Profilierung;
Figur 5a einen schematisch dargestellten Querschnitt durch ein herkömmliches Schlüsselprofil;
Figur 5b den schematisch dargestellten Querschnitt durch einen erfindungsgemässen Schlüsselrohling gemäss Figur 5a, jedoch vor der Berechnung der zur berücksichtigenden Sperrzone;
Figur 5c den schematisch dargestellten Querschnitt durch einen erfindungsgemässen Schlüsselrohling gemäss Figur 5a, nach Abschluss der Berechnung der zur berücksichtigenden Sperrzone;

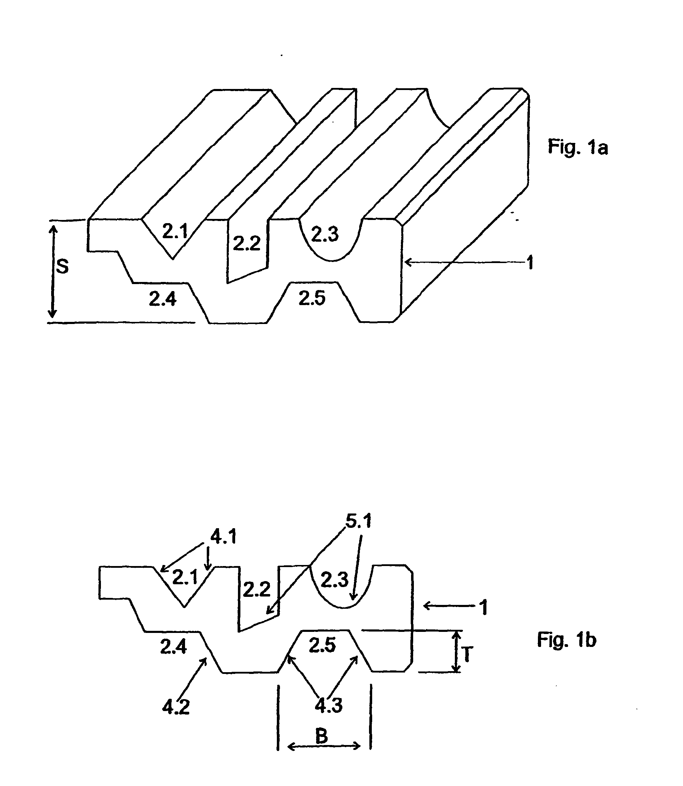

Figur 1a und 1b zeigen das Profil eines herkömmlichen Zylinder-Schlüssels (1) mit verschiedenen Profil-Ausnehmungen unterschiedlicher Form (2.1 - 2.5). Um einen Zweitschlüssel zu dem zugehörigen Schloss (Schliesszylinder) herzustellen, benötigt der Schlüsseldienst einen Schlüsselrohling mit entsprechendem Profil in den dann Stirnseitig Zacken eingefräst werden.

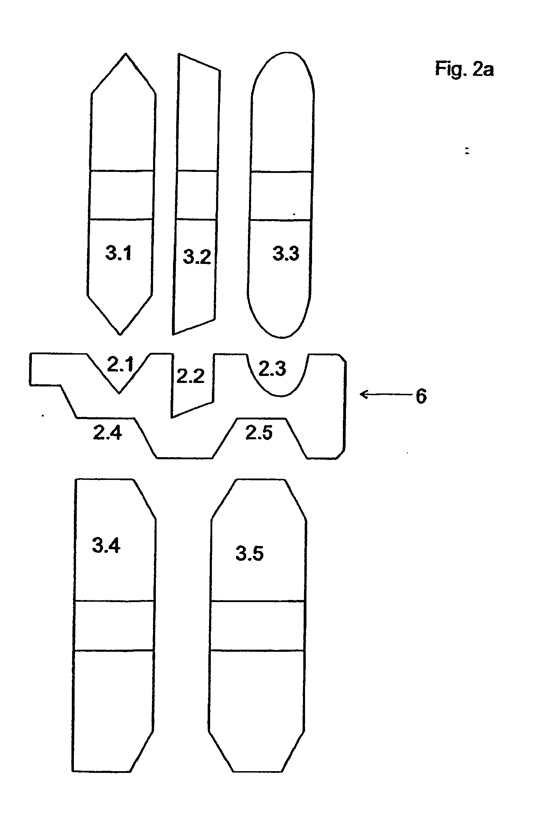

Ist ein Schlüsselrohling mit entsprechendem Profil nicht vorhanden, lässt sich wie in Figur 2a mit einer herkömmlichen Kopierfräseinrichtung mit unterschiedlich ausgebildeten Fräsern (3.1 - 3.5) ein Werkstück (6) so mit Profil-Ausnehmungen (2.1 - 2.5) versehen, dass ein Schlüsselrohling mit geeignetem Profil entsteht. Dies ist jedoch aufgrund der Vielzahl der benötigten Fräser-Formen sehr Aufwendig.

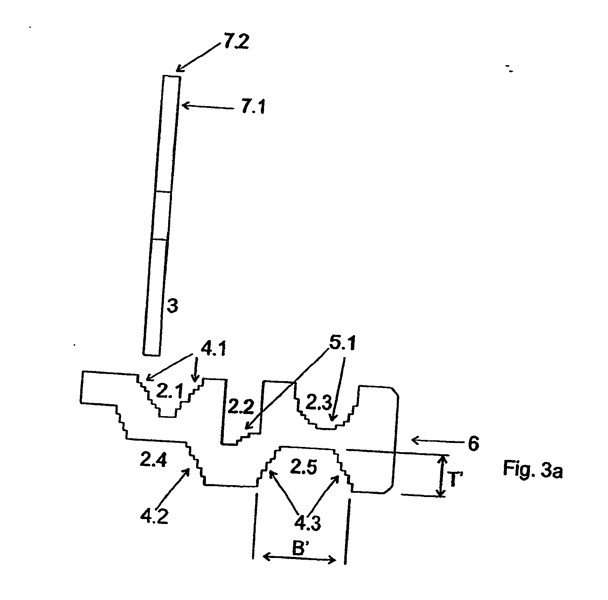

Eine andere Möglichkeit bieten herkömmliche Kopierfräseinrichtungen die mit vorzugsweise nur einem Fräsrad arbeiten. Die Profil-Ausnehmungen (2.1 - 2.5) des Originalschlüssels (1) in Figur 1b werden dabei wie in Figur 3a gezeigt durch eine fein abgestufte Profilform in das Werkstück (6) gefräst. Hierbei werden sowohl die Nut-Flanken (4.1 - 4.3) wie auch die Nut-Böden (5.1) so abgestuft, dass die Form des Profils im Werkstück (6) dem Profil des Schlüssels (1) weitgehend entspricht. Dieser Vorgang dauert bedingt durch die grosse Zahl der benötigten fein abgestuften Fräs-Vorgänge sehr lange.

Um einen geeigneter Schlüsselrohling schnell, kostengünstig und Werkzeugschonend herzustellen ermittelt das erfindungsgemässe Verfahren mittels optischem, akustischem oder mechanischem Messverfahren die Profilstruktur des herzustellenden Schlüssels (1). Ferner werden gleichzeitig, davor oder danach die maximalen Tiefen (T) und die maximalen Breiten (B) der einzelnen Profil-Ausnehmungen (2.1 - 2.5) ermittelt. Zudem werden hier nicht näher dargestellte Ortskoordinaten, d. h., an welcher Stelle des Schlüssels (1) sich entsprechende Profil-Ausnehmungen befinden, ermittelt.

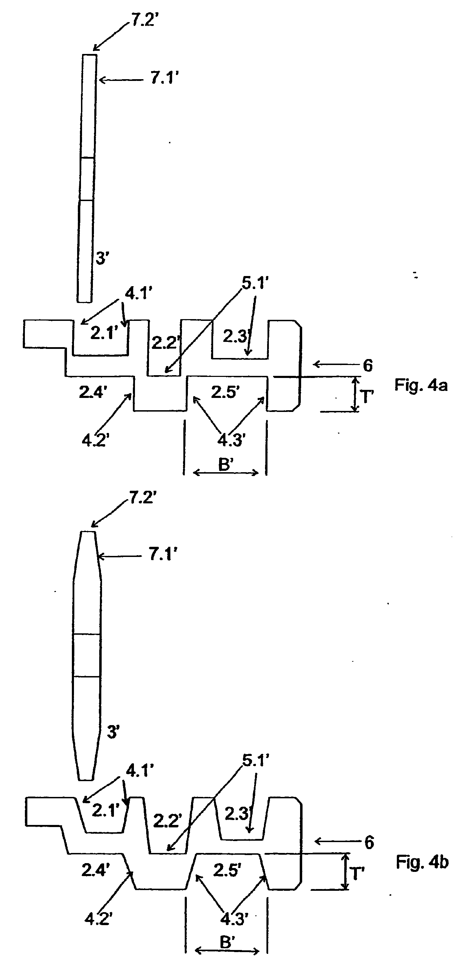

Um einen Schlüsselrohling aus einem Werkstück (6) wie in Figur 4a dargestellt, zu fertigen, wird entsprechend der maximalen Breiten (B) und Tiefen (T) der einzelnen Profil-Ausnehmungen (2.1 - 2.5) ein Profil errechnet und/oder aus gespeicherten Profilen ermittelt und/oder aus einzelnen Profilteilen zusammengesetzt, das mit dem in der Fräsmaschine eingespannten Fräsrad (3') am schnellsten gefräst werden kann. Hierbei wird die Geometrie (7.1', 7.2') des Fräsrades (3') berücksichtigt.

Das Werkstück (6) in Figur 4a wird dann mit dem ermittelten Spezial-Profil durch Fräsen oder Schleifen versehen. In dem Anwendungsbeispiel in Figur 4a wird beispielsweise ein Fräsrad (3') verwendet, dessen Seitengeometrie (7.1') Spitzengeometrie (7.2') eine gerade zulaufende Form aufweisen. Passend dazu entsteht in diesem Ausführungsbeispiel ein Profil dessen Profil-Ausnehmungen (2.1' - 2.5') entsprechend den geraden Seitenflächen (7.1') des Fräsers (3') und zu der geraden Stirnfläche (7.2') des Fräsers (3') optimiert sind. Die Nut-Flanken (4.1') sind hierbei lotrecht zur Werkstückoberfläche so dass die Nut-Flanken mittels einmaligem Eintauchens des geraden Fräsers (3') sehr schnell gefräst werden können. Die ebenen Nut-Böden (5.1') können zudem sehr schnell gefräst werden weil die komplette Fräserbreite der Fräser-Stirnseite (7.2') zum Einsatz kommt.

Je nach Geometrie des Fräsers ergeben sich unterschiedliche Möglichkeiten der Umrechnung der Profil-Ausnehmungen (2.1 - 2.5). So zeigt Figur 4b ein für den trapezförmigen Fräser (3') optimiertes Profil mit entsprechend geneigten Nut-Flanken (4.1', 4.2', 4.3').

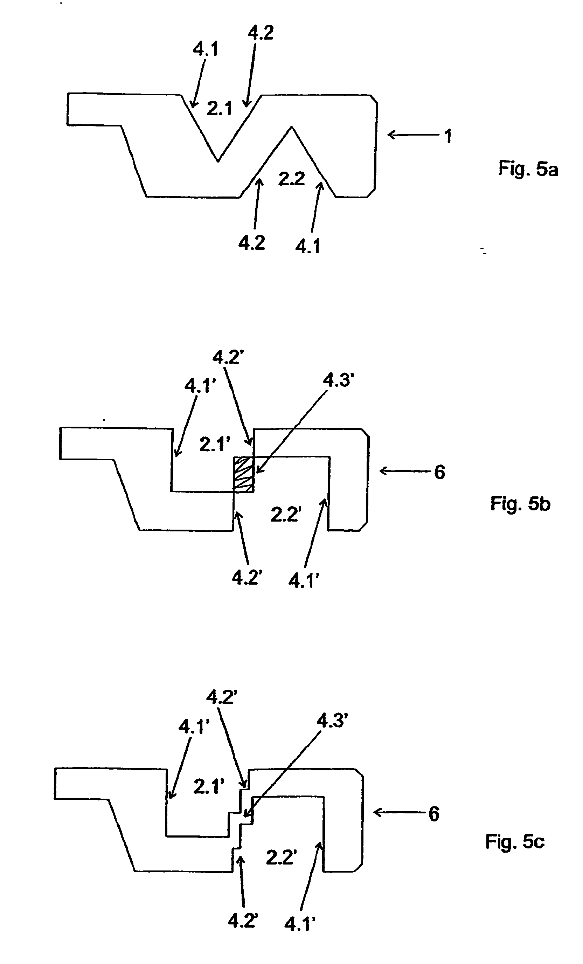

Sollten bei einem zu fertigenden Schlüssel (1) gegenüberliegende Profil-Nuten mit ihren Nut-Flanken (4.2), wie in Figur 5a dargestellt, sehr nahe zusammen liegen, so werden in diesem Bereich die Nut-Flanken (4.2') nicht wie in Figur 5b abgebildet, streng nach der Fräser-Geometrie berechnet. Die dadurch zu erwartende Schwächung des Profils oder einem Durchschneiden des Profils (4.3') wird durch das erfindungsgemässe Verfahren verhindert indem wie in Figur 5c im Bereich 4.3' durch eine Abstufung eine maximale Profil-Stärke berechnet wird.

### Bild-Positionen

- 1: Schlüssel
- 2: Profilnuten
- 3: Werkzeug
- 4: Nutflanken
- 5: Nutböden
- 6: Werkstück
- 7: Fräser-Teile

- S: Gesamtstärke des Schlüssels
- B: Nutbreite maximal
- T: Nuttiefe maximal

## Patentansprüche

1. Verfahren zum Herstellen eines Schlüsselrohlings aus einem Werkstück (6) mit zumindest einem Werkzeug, insbesondere einem Fräser (3') einer Fräseinrichtung, wobei die Profile als Nuten (2.1' - 2.5'), Ausnehmungen od. dgl. in das Werkstück (6) eingebracht werden, wobei vorgegebene, kopierte oder aufgenommene Profile (2.1 - 2.5) mit Breite (B) und Teile (T) in Profile (2.1' - 2.5') entsprechend der Geometrie des/der verwendeten Werkzeuge/s, insbesondere Fräser/s (3'), umgewandelt werden/wurden, wobei Profile herkömmlicher Schlüssel (1) bestehend aus einer Mehrzahl von beliebig ausgebildeten Nuten (2.1 - 2.5), Ausnehmungen, Stege umgerechnet werden zu Nuten (2.1' - 2.5'), Ausnehmungen, Stege die eine entsprechend der Geometrie des/der Fräser (3') optimierte Form aufweisen, wobei eine Breite (B') und eine Tiefe (T') der Profil-Ausnehmungen in etwa der Breite (B) und Tiefe (T) entsprechen und die gegenüberliegenden Profilnuten (2.1' und 2.2'), welche sehr nahe zusammen liegen, und um eine Schwächung des Profils oder ein Durchschneiden des Profils zu verhindern werden nicht streng nach der Fräsergeometrie berechnet, sondern in diesem Bereich (4.3') wird durch eine Abstufung (4.2', 4.3') eine maximale Profil-Stärke berechnet.

2. Verfahren nach Anspruch 1, **dadurch gekennzeichnet, dass** die Profil-Ausnehmungen (2.1' - 2.5') in einer Nut-Breite (B') und/oder Nut-Tiefe (T') eines vorgegebenen oder zu kopierenden oder zu übernehmenden Profils eingefräst werden, die den Nut-Breiten (B) und/oder Nut-Tiefen (T) in etwa entsprechen.

3. Verfahren nach Anspruch 1 oder 2, **dadurch gekennzeichnet, dass** die Nut-Flanken (4.1' - 4.3') der Profil-Ausnehmungen (2.1' - 2.5') zur Herstellung des Schlüsselrohlings in etwa lotrecht zu der Werkstückoberfläche eingebracht werden.

4. Verfahren nach Anspruch 1 oder 2, **dadurch gekennzeichnet, dass** die Nut-Böden (5.1') der Profil-Ausnehmungen (2.1' - 2.5') zur Herstellung des Schlüsselrohlings in etwa parallel zu der Werkstückoberfläche eingebracht werden.

5. Verfahren nach Anspruch 1 oder 2, **dadurch gekennzeichnet, dass** die Nut-Flanken (4.1' - 4.3') der Profil-Ausnehmungen (2.1' - 2.5') zur Herstellung des Schlüsselrohlings in etwa entsprechend des/der Winkel der Fräser-Seiten (7.1') des/der verwendeten Fräser zu der Werkstückoberfläche eingebracht werden.

6. Verfahren nach Anspruch 1 oder 2, **dadurch gekennzeichnet, dass** die Nut-Böden (5.1') der Profil-Ausnehmungen (2.1' - 2.5') zur Herstellung des Schlüsselrohlings in etwa vergleichbar der Geometrie der Fräser-Spitze (7.2') in das Werkstück (6) eingebracht werden.

7. Verfahren nach wenigstens einem der vorangegangenen Ansprüche **dadurch gekennzeichnet, dass** über eine Kopier- oder Leseeinrichtung ein herkömmliches Profil eines Schlüssels (1) eingelesen wird, wobei die einzelnen Nuten (2.1 - 2.5), Stege, die auch als positive oder negative Schrägen oder radiale Profilnuten ausgebildet sind, in eine entsprechend der Geometrie des/der Fräser (3') optimierte Form umgerechnet werden, mit in etwa gleicher Breite (B, B') und Tiefe (T, T') und in das Werkstück (6) eingefräst oder eingebracht werden.

8. Verfahren nach wenigstens einem der vorangegangenen Ansprüche **dadurch gekennzeichnet, dass** eine Vielzahl von herkömmlichen Profilen von Schlüsseln (1) abgespeichert werden oder sind, wobei jedes Profil in ein Profil entsprechend der Geometrie des/der Fräser (3') optimierte Form umgerechnet wird.

9. Verfahren nach wenigstens einem der vorangegangenen Ansprüche **dadurch gekennzeichnet, dass** eine Vielzahl von herkömmlichen einzelnen Profil-Teilstücken, Nuten, Ausnehmungen abgespeichert werden oder sind, wobei jedes Profil-Teilstück in ein Profil-Teilstück entsprechend der Geometrie des/der Fräser (3') optimierte Form umgerechnet wird.

10. Verfahren nach wenigstens einem der vorangegangenen Ansprüche **dadurch gekennzeichnet, dass** eine SchlüsselProfil aus einer Vielzahl einzelner Profil-Teilstücke, Nuten, Ausnehmungen zusammengesetzt und berechnet wird.

11. Verfahren nach wenigstens einem der vorangegangenen Ansprüche **dadurch gekennzeichnet, dass** die abgespeicherten Schlüssel-Profile und/oder Profil-Teilstücke bereits in eine entsprechend der Geometrie des/der Fräser (3') optimierte Form umgerechnet sind.

## Claims

1. Method of manufacturing a key blank from a workpiece (6) by means of at least one tool, in particular a milling tool (3') of a milling device, wherein the profiles are introduced in the form of grooves (2.1' - 2.5'), recesses or the like into the workpiece (6), wherein defined, copied or recorded profiles (2.1 - 2.5) of width (B) and depth (T) are/were transformed into profiles (2.1' - 2.5') in accordance with the geometry of the tool(s) used, in particular of the milling tool(s) (3'), wherein profiles of conventional keys (1) comprising a plurality of grooves (2.1 - 2.5), recesses, webs of any desired design are converted into grooves (2.1' - 2.5'), recesses, webs, which have a shape optimized in accordance with the geometry of the milling tool(s) (3'), wherein a width (B') and a depth (T') of the profile recesses correspond approximately to the width (B) and depth (T) and the opposite profile grooves (2.1' and 2.2'), which lie very close together, and, in order to prevent a weakening or cutting-through of the profile, are not calculated strictly in accordance with the milling tool geometry, rather in said region (4.3') a maximum profile thickness is calculated by means of a stepping (4.2', 4.3').

2. Method according to claim 1, **characterized in that** the profile recesses (2.1' - 2.5') are milled in a groove width (B') and/or groove depth (T') of a defined profile or of a profile to be copied or transferred, which correspond approximately to the groove widths (B) and/or groove depths (T).

3. Method according to claim 1 or 2, **characterized in that** the groove flanks (4.1' - 4.3') of the profile recesses (2.1' - 2.5') for manufacture of the key blank are introduced approximately perpendicular to the workpiece surface.

4. Method according to claim 1 or 2, **characterized in that** the groove bases (5.1') of the profile recesses (2.1' - 2.5') for manufacture of the key blank are introduced approximately parallel to the workpiece surface.

5. Method according to claim 1 or 2, **characterized in that** the groove flanks (4.1' - 4.3') of the profile recesses (2.1' - 2.5') for manufacture of the key blank are introduced approximately in accordance with the angle(s) of the milling tool sides (7.1') of the used milling tool(s) relative to the workpiece surface.

6. Method according to claim 1 or 2, **characterized in that** the groove bases (5.1') of the profile recesses (2.1' - 2.5') for manufacture of the key blank are introduced into the workpiece (6) in a manner approximately comparable to the geometry of the milling tool tip (7.2') .

7. Method according to at least one of the preceding claims **characterized in that** a conventional profile of a key (1) is read in by means of a copying or reading device, wherein the individual grooves (2.1 - 2.5), webs, which also take the form of positive or negative slopes or radial profile grooves, are converted into a shape optimized in accordance with the geometry of the milling tool(s) (3'), of approximately identical width (B, B') and depth (T, T') and are milled or introduced into the workpiece (6).

8. Method according to at least one of the preceding claims **characterized in that** a plurality of conventional profiles of keys (1) are stored, wherein each profile is converted into a profile shape optimized in accordance with the geometry of the milling tool(s) (3').

9. Method according to at least one of the preceding claims **characterized in that** a plurality of conventional individual profile portions, grooves, recesses are stored, wherein each profile portion is converted into a profile portion shape optimized in accordance with the geometry of the milling tool(s) (3') .

10. Method according to at least one of the preceding claims **characterized in that** a key profile is composed of and calculated from a plurality of individual profile portions, grooves, recesses.

11. Method according to at least one of the preceding claims **characterized in that** the stored key profiles and/or profile portions are already converted into a shape optimized in accordance with the geometry of the milling tool(s) (3').

## Revendications

1. Procédé de fabrication d'une clé-ébauche à partir d'une pièce à usiner (6) à l'aide d'au moins un outil, en particulier une fraise (3') d'un dispositif de fraisage, les profils étant réalisés sous forme de rainures (2,1' à 2.5'), d'évidements ou autres dans la pièce à usiner (6), les profils prédéterminés, copiés ou reçus (2.1 à 2.5) d'une largeur (B) et d'une profondeur (T) sont/ont été transformés en profils (2.1' à 2.5') selon la géométrie de ou des outils, en particulier fraise ou fraises (3'), utilisés, les profils de clés traditionnelles (1) composés d'une pluralité de rainures (2.1 à 2.5), d'évidements, d'entretoises réalisés de manière arbitraire étant recalculés pour obtenir des rainures (2.1' à 2.5'), évidements, entretoises présentant une forme optimisée selon la géométrie de la ou des fraises (3'), une largeur (B') et une profondeur (T') des évidements de profil correspondant environ à la largeur (B) et à la profondeur (T), et les rainures de profil opposées (2.1' et 2.2'), qui se trouvent très proches l'une de l'autre, et afin d'éviter un affaiblissement du profil ou une coupure du profil, ne sont pas calculées strictement selon la géométrie de fraise, mais dans cette zone (4.3') est calculée, par une réduction étagée (4.2', 4.3'), une épaisseur de profil maximale.

2. Procédé selon la revendication 1, **caractérisé par le fait que** les évidements de profil (2.1' à 2.5') sont fraisés selon une largeur de rainure (B') et/ou une profondeur de rainure (T') d'un profil prédéterminé ou à copier ou à reprendre correspondant environ aux largeurs de rainure (B) et/ou profondeurs de rainure (T).

3. Procédé selon la revendication 1 ou 2, **caractérisé par le fait que** les flancs de rainure (4.1' à 4.3') des évidements de profil (2.1' à 2.5') sont réalisés, pour la fabrication de la clé-ébauche, environ verticalement par rapport à la surface de la pièce à usiner.

4. Procédé selon la revendication 1 ou 2, **caractérisé par le fait que** les fonds de rainure (5.1') des évidements de profil (2.1' à 2.5') sont réalisés, pour la fabrication de la clé-ébauche, environ horizontalement par rapport à la surface de la pièce à usiner.

5. Procédé selon la revendication 1 ou 2, **caractérisé par le fait que** les flancs de rainure (4.1' à 4.3') des évidements de profil (2.1' à 2.5') sont réalisés, pour la fabrication de la clé-ébauche, environ selon le ou les angles des côtés de fraise (7.1') de la ou des fraises utilisées par rapport à la surface de la pièce usinée.

6. Procédé selon la revendication 1 ou 2, **caractérisé par le fait que** les fonds de rainure (5.1') des évidements de profil (2.1' à 2.5') sont réalisés, pour la fabrication de la clé-ébauche, de manière environ comparable à la géométrie de la pointe de fraise (7.2') dans la pièce à usiner (6).

7. Procédé selon au moins l'une des revendications précédentes, **caractérisé par le fait que** par l'intermédiaire d'un dispositif de copie ou de lecture est lu un profil traditionnel d'une clé (1), les différentes rainures (2.1 à 2.5), entretoises, qui sont également réalisées sous forme de surfaces obliques positives ou négatives ou de rainures profilées radiales, sont recalculées de manière à présenter une forme optimisée selon la géométrie de la ou des fraises (3'), sont fraisées ou réalisées selon environ la même largeur (B, B') et profondeur (T, T') dans la pièce à usiner (6).

8. Procédé selon au moins l'une des revendications précédentes, **caractérisé par le fait qu'**une pluralité de profils traditionnels de clés (1) sont mémorisés, chaque profil étant recalculé pour obtenir un profil de forme optimisée selon la géométrie de la ou des fraises (3').

9. Procédé selon au moins l'une des revendications précédentes, **caractérisé par le fait qu'**une pluralité de parties de profil, rainures, évidements traditionnels sont mémorisés, chaque partie de profil étant recalculée pour obtenir un profil de forme optimisée selon la géométrie de la ou des fraises (3').

10. Procédé selon au moins l'une des revendications précédentes, **caractérisé par le fait qu'**un profil de clé se compose et est calculé à partir d'une pluralité de parties de profil, rainures, évidements individuels.

11. Procédé selon au moins l'une des revendications précédentes, **caractérisé par le fait que** les profils de clé et/ou parties de profil mémorisés sont déjà recalculés de manière à présenter une forme optimisée selon la géométrie de la ou des fraises (3').
